# EUROPEAN PATENT SPECIFICATION

(11) **EP 3 473 910 B1**
(45) Date of publication and mention of the grant of the patent: **20.04.2022**
(21) Application number: 18201988.5
(22) Date of filing: 23.10.2018
(51) Int. Cl.: F16L 9/18, F16L 55/033, B33Y 80/00, B29C 64/00, B64D 13/00, F16L 55/027

(54) **DUCT ASSEMBLY HAVING INTERNAL NOISE REDUCTION FEATURES, THERMAL INSULATION AND LEAK DETECTION**
LEITUNGSANORDNUNG MIT INTERNEN GERÄUSCHREDUZIERUNGSMERKMALEN, WÄRMEDÄMMUNG UND LECKDETEKTION
ENSEMBLE CONDUIT AYANT DES CARACTÉRISTIQUES DE RÉDUCTION DE BRUIT INTERNE, UNE ISOLATION THERMIQUE ET UNE DÉTECTION DE FUITES

(30) Priority: 23.10.2017 US 201715790786
(43) Date of publication of application: 24.04.2019
(73) Proprietor: Hamilton Sundstrand Corporation, Charlotte, NC 28217-4578 (US)
(72) Inventor: PALMER, Nigel G. M., W Granby, CT Connecticut 06090 (US)
(74) Representative: Dehns

(56) References cited:
- EP-A1- 2 952 747
- EP-A1- 3 086 011
- EP-A2- 1 291 570
- DE-C1- 4 232 195
- GB-A- 1 574 480
- US-A1- 2010 187 038

## Description

### BACKGROUND

Exemplary embodiments pertain to the art of duct assemblies having internal noise reduction features.

A fluid flow within a pipe may produce noise. Typical methods to reduce this flow induced noise may include noise reduction treatments that are disposed about or disposed within the pipe. These noise reduction treatments are not tuned to attenuate a specific frequency, are often heavy or bulky, and may deteriorate in service. Accordingly, it is desirable to provide a more compact and efficient noise reduction mechanism for a pipe. EP 1291570 A2, US 2010/187038 A1, and GB 1574480 A all relate to fluid carrying conduits with noise attenuation. DE4232195 C1 relates to a flexible hose as a safety connection. EP 2952747 A1 relates to a compressor system with noise reduction. EP 3086011 A1 relates to a walled pipe with integrated heating.

### BRIEF DESCRIPTION OF THE INVENTION

According to the invention a duct assembly as set out in claim 1 is provided. Further preferred embodiments of the invention are set out in the dependent claims.

### BRIEF DESCRIPTION OF THE DRAWINGS

With reference to the accompanying drawings, like elements are numbered alike:
FIG. 1 is a partial isometric view of a duct assembly having internal noise reduction features, thermal insulation, and leak detection features;
FIG. 2 is an end view of the duct assembly;
FIG. 3 is a partial cross-sectional view taken along section A-A; and
FIG. 4 is a partial cross-sectional view taken along section B-B.

### DETAILED DESCRIPTION

A detailed description of one or more embodiments of the disclosed apparatus and method are presented herein by way of exemplification and not limitation with reference to the Figures.

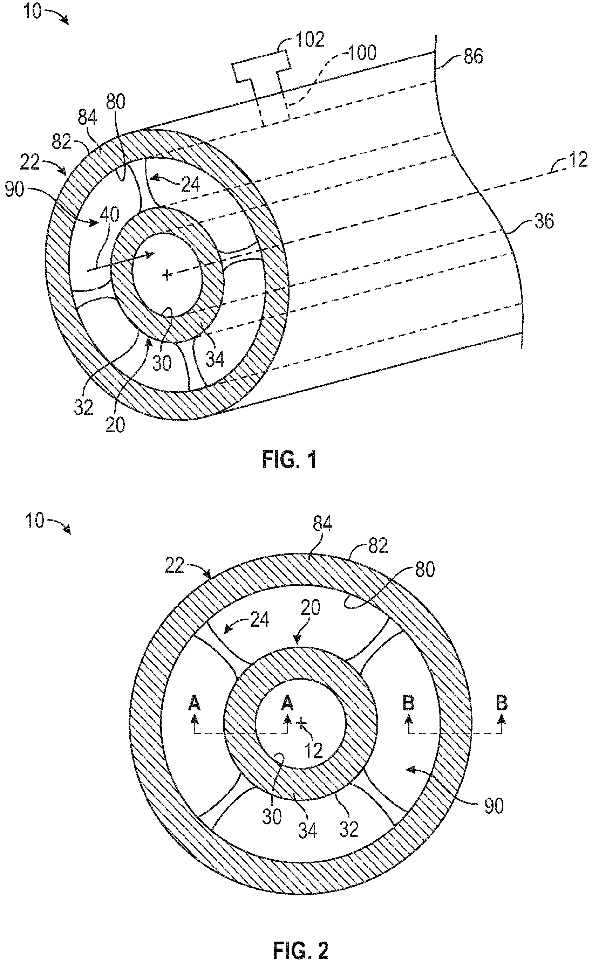

Referring to FIGS. 1 and 2, a duct assembly 10 having internal noise reduction features, thermal insulation, and leak detection features is shown. The duct assembly 10 extends along and is disposed about an axis 12. The duct assembly 10 may have any appreciable shape while viewed in cross-section, such as ovate, rectangular, cylindrical, circular, or the like. The duct assembly 10 includes a first duct 20, a second duct 22, and a support member 24.

The first duct 20 includes a first inner wall 30 and a first outer wall 32 that each extend between a first duct first end 34 and a first duct second end 36 along the axis 12. The first inner wall 30 defines an inner cavity or a first flow path 40 that is arranged to receive a fluid. For example, should the duct assembly 10 be incorporated into an environmental control system or bleed system, the first flow path 40 receives bleed air and directs the bleed air to another component of the environment control system or bleed system or directs the bleed air towards or within an aircraft cabin.

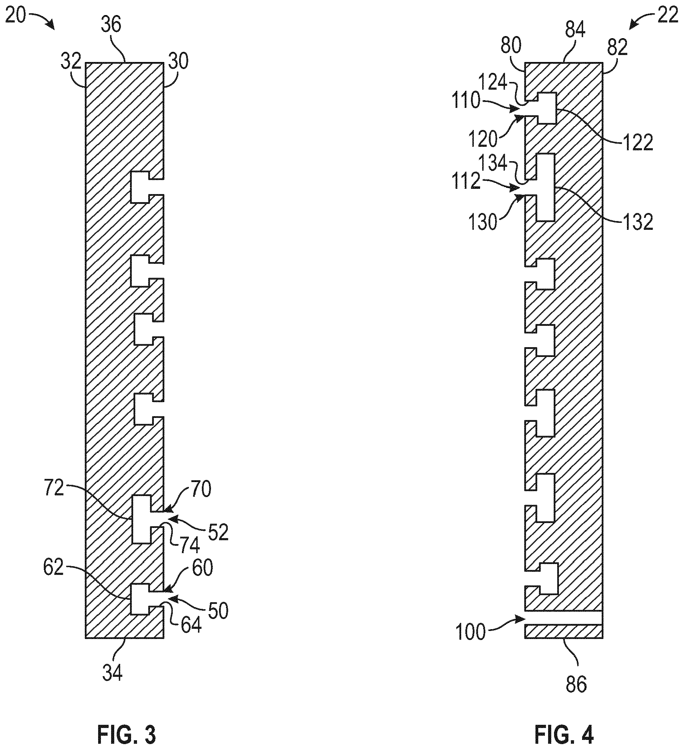

Referring to FIGS. 1 and 3, the first duct 20 defines a plurality of resonators that are defined between the first inner wall 30 and the first outer wall 32. The plurality of resonators are built into the first duct 20 and have various sizes, shapes, or volumes that are tuned to the frequency range to damp flow resonated acoustic noise at specific frequencies. The resonators may be configured as Helmholtz resonators that are additively manufactured into the first duct 20.

Referring to FIG. 3, the first duct 20 defines a first duct first resonator 50 and a first duct second resonator 52.

The first duct first resonator 50 extends between and is completely defined between the first inner wall 30 and the first outer wall 32. The first duct first resonator 50 includes a first opening 60, a first cavity 62, and a first throat 64. The first opening 60 extends through the first inner wall 30. The first cavity 62 is defined between and is spaced apart from each of the first inner wall 30 and the first outer wall 32. The first cavity 62 has a first volume or a first resonator volume. The first throat 64 extends between the first opening 60 and the first cavity 62 along an axis that is disposed substantially transverse to the axis 12. The first throat 64 has a first throat length.

The first cavity 62 and the first throat 64 are sized to provide a spring effect or damping effect to damp or attenuate a particular frequency. The size or volume of the first cavity 62 and/or the first throat length of the first throat 64 are based on many factors, such as the density, temperature, or velocity of the fluid that flows through the first duct 20 and/or the diameter of the first duct 20.

The first duct second resonator 52 is axially spaced apart from the first duct first resonator 50 along the axis 12. The first duct second resonator 52 includes a second opening 70, a second cavity 72, and a second throat 74. The second opening 70 extends through the first inner wall 30. The second cavity 72 is defined between and is spaced apart from each of the first inner wall 30 and the first outer wall 32. The second cavity 72 may be radially offset, relative to the axis 12, from the first cavity 62. The second cavity 72 has a second volume or a second resonator volume. The second throat 74 extends between the second opening 70 and the second cavity 72 along an axis that is disposed substantially transverse to the axis 12. The second throat 74 has a second throat length.

The second cavity 72 and the second throat 74 are sized to provide an acoustic or damping effect to damp or attenuate a particular acoustic frequency that may be different from the particular acoustic frequency that the first throat 64 and the first cavity 62 are to damp. The size or volume of the second cavity 72 and/or the second throat length of the second throat 74 based on many factors, such as the density, temperature, or velocity of the fluid that flows through the first duct 20 and/or the diameter of the first duct 20.

The first volume of the first cavity 62 may be different from the second volume of the second cavity 72. In at least one embodiment, the first volume of the first cavity 62 may be less than the second volume of the second cavity 72. In other embodiments, the first volume of the first cavity 62 may be greater than or substantially equal to the second volume of the second cavity 72.

The first throat length of the first throat 64 may be different from the second throat length of the second throat 74. In at least one embodiment, the first throat length of the first throat 64 may be less than the second throat length of the second throat 74. In other embodiments, the first throat length of the first throat 64 may be greater than or substantially equal to the second throat length of the second throat 74.

Additional first duct resonators may be defined between the first inner wall 30 and the first outer wall 32. The additional first duct resonators may be axially and/or radially spaced apart from the first duct first resonator 50 and the first duct second resonator 52. The size and shape of the additional first duct resonators may be different from the size and shape of the first duct first resonator 50 and the first duct second resonator 52.

Referring to FIGS. 1 and 4, the second duct 22 is disposed about and is spaced apart from the first duct 20. The second duct 22 includes a second inner wall 80 and a second outer wall 82 that each extend between a second duct first end 84 and a second duct second end 86 along the axis 12. The second inner wall 80 is spaced apart from the first outer wall 32 such that an insulating air gap 90 is defined between the first duct 20 and the second duct 22.

The insulating air gap 90 acts as thermal insulation between the first duct 20 and the second duct 22. The size of insulating air gap 90 may be based on a height, length, or width of the support member 24 that extends between the first duct 20 and the second duct 22. The insulating air gap 90 is an insulating layer that is designed to accommodate a second outer wall touch temperature requirement.

The second duct 22 defines a port 100. The port 100 extends from the second inner wall 80 to the second outer wall 82. The port 100 is fluidly connected to the insulating air gap 90 such that a flow path may be created between a leak from the first duct 20 and the port 100.

A leakage detection sensor or leakage detection system 102 is operatively connected to the port 100. The leakage detection system 102 includes a sensing element that may detect leakage from within the first duct 20 that may bleed into the insulating air gap 90 by detecting a change in flow within the insulating air gap 90, a change in pressure within the insulating air gap 90, or a change in temperature within the insulating air gap 90. The leakage detection system 102 is configured to output for display an indicator or warning indicative of leakage of fluid from within the first duct 20 responsive to the presence of fluid from within the first duct 20 being detected within the insulating air gap 90 by a sensor of the leakage detection system 102.

Referring to FIGS. 1 and 4, the second duct 22 defines a plurality of resonators that are defined between the second inner wall 80 and the second outer wall 82. The plurality of resonators are built into the second duct 22 and have various sizes, shapes, or volumes that are tuned to the specific frequency range to damp flow resonated acoustic noise at specific frequencies. The resonators may be configured as Helmholtz resonators that are additively manufactured into the second duct 22.

The second duct 22 defines a second duct first resonator 110 and a second duct second resonator 112. In at least one embodiment, the second duct first resonator 110 may be out of phase with the first duct first resonator 50 such that the second duct first resonator 110 is axially offset from the first duct first resonator 50 along the axis 12. In other embodiments, the second duct first resonator 110 may be in phase with the first duct first resonator 50 such that the second duct first resonator 110 is axially and radially aligned with the first duct first resonator 50.

The second duct first resonator 110 extends between and is completely defined between the second inner wall 80 and the second outer wall 82. The second duct first resonator 110 includes a second duct first opening 120, a second duct first cavity 122, and a second duct first throat or a second duct first throat 124. The second duct first opening 120 extends through the second inner wall 80. The second duct first cavity 122 is defined between and is spaced apart from each of the second inner wall 80 and the second outer wall 82. The second duct first cavity 122 has a first resonator volume. The second duct first throat 128 extends between the second duct first opening 120 and the second duct first cavity 122 along an axis that is disposed substantially transverse to the axis 12. The second duct first throat 124 has a first throat length.

The second duct first cavity 122 and the second duct first throat 124 are sized to provide an acoustic or damping effect to damp or attenuate a particular acoustic frequency. The size or volume of the second duct first cavity 122 and/or the first throat length of the second duct first throat 124 are based on many factors, such as the density, temperature, or velocity of the fluid that flows through the first duct 20 and/or the diameter of the first duct 20 or second duct 22.

The second duct second resonator 112 is axially spaced apart from the second duct first resonator 110 along the axis 12. The second duct second resonator 112 includes a second duct second opening 130, a second duct second cavity 132, and a second duct second throat or a second duct second throat 134. The second duct second opening 130 extends through the second inner wall 80. The second duct second cavity 132 is defined between and is spaced apart from each of the second inner wall 80 and the second outer wall 82. The second duct second cavity 132 may be radially offset, relative to the axis 12, from the second duct first cavity 122. The second duct second cavity 132 has a second resonator volume. The second duct second throat 134 extends between the second duct second opening 130 and the second duct second cavity 132 along an axis that is disposed substantially transverse to the axis 12. The second duct second throat 134 has a second throat length.

The second duct second cavity 132 and the second duct second throat 134 are sized to provide a spring effect or damping effect to damp a particular frequency that may be different from the particular frequency that the second duct first throat 124 and the second duct first cavity 122 are to damp. The size or volume of the second duct second cavity 132 and/or the second throat length of the second duct second throat 134 based on many factors, such as the density, temperature, or velocity of the fluid that flows through the first duct 20 and/or the diameter of the first duct 20 or the second duct 22.

The first resonator volume of the second duct first cavity 122 may be different from the second resonator volume of the second duct second cavity 132. In at least one embodiment, the first resonator volume of the second duct first cavity 122 may be less than the second resonator volume of the second duct second cavity 132. In other embodiments, the first resonator volume of the second duct first cavity 122 may be greater than or substantially equal to the second resonator volume of the second duct second cavity 132.

The first throat length of the second duct first throat 124 may be different from the second throat length of the second duct second throat 134. In at least one embodiment, the first throat length of the second duct first throat 124 may be less than the second throat length of the second duct second throat 134. In other embodiments, the first throat length of the second duct first throat 124 may be greater than or substantially equal to the second throat length of the second duct second throat 134.

Additional second duct resonators may be defined between the second inner wall 80 and the second outer wall 82. The additional second duct resonators may be axially and/or radially spaced apart from the second duct first resonator 110 and the second duct second resonator 112. The size and shape of the additional second duct resonators may be different from the size and shape of the second duct first resonator 110 and the second duct second resonator 112.

The support member 24 extends between the first outer wall 32 of the first duct 20 and the second inner wall 80 of the second duct 22. In at least one embodiment, a plurality of circumferentially spaced apart support members extend between and are operatively connect the first duct 20 and the second duct 22.

The support member 24 spaces the first duct 20 from the second duct 22. The support member 24 may be additively manufactured along with the first duct 20 and the second duct 22 such that the duct assembly 10 is a single integrated unit that provides noise reduction features, insulation, and leak detection features.

The term "about" is intended to include the degree of error associated with measurement of the particular quantity based upon the equipment available at the time of filing the application.

## Claims

1. A duct assembly (10), comprising:
a first duct (20) having a first inner wall (30) and a first outer wall (32), each extending between a first duct first end (34) and a first duct second end (36), the first duct (20) defining a first duct first resonator (50) that extends between the first inner wall (30) and the first outer wall (32), the first inner wall (30) defining a first flow path, and
a second duct (22) that is disposed about the first duct (20), the second duct (22) having a second inner wall (80) spaced apart from the first outer wall (32) and a second outer wall (82), each extending between a second duct first end (84) and a second duct second end (86);
**characterized in that** the second duct (22) defines a second duct first resonator (110) that is defined between the second inner wall (80) and the second outer wall (82).

2. The duct assembly of claim 1, wherein the first duct first resonator (50) includes a first opening that extends through the first inner wall (30), a first cavity (62) defined between the first inner wall (30) and the first outer wall (32), and a first throat (64) extending between the first opening and the first cavity.

3. The duct assembly of claim 2, wherein the first duct (20) defines a first duct second resonator (52) that is spaced apart from the first duct first resonator (50).

4. The duct assembly of claim 3, wherein the first duct second resonator (52) defines a second opening (70) that extends through the first inner wall (30), a second cavity (72) that is defined between the first inner wall (30) and the first outer wall (32), and a second throat (74) that extends between the second opening (70) and the second cavity (32).

5. The duct assembly of claim 4, wherein the first cavity (62) has a first volume and the second cavity (72) has a second volume.

6. The duct assembly of claim 5, wherein the first volume is different from the second volume.

7. The duct assembly of any preceding claim, wherein the second duct (22) defines a port (100) that extends from the second inner wall (80) to the second outer wall (82).

8. The duct assembly of any preceding claim, further comprising:
a support member (24) that extends between the first outer wall (32) and the second inner wall (80), spacing the second duct (22) apart from the first duct (20).

9. The duct assembly of claim 8, wherein an insulating air gap is defined between the first outer wall (32) of the first duct (20) and the second inner wall (82) of the second duct (22).

## Patentansprüche

1. Leitungsbaugruppe (10), umfassend:
eine erste Leitung (20), die eine erste Innenwand (30) und eine erste Außenwand (32) aufweist, die sich jeweils zwischen einem ersten Ende (34) der ersten Leitung und einem zweiten Ende (36) der ersten Leitung erstrecken, wobei die erste Leitung (20) einen ersten Resonator (50) der ersten Leitung definiert, der sich zwischen der ersten Innenwand (30) und der ersten Außenwand (32) erstreckt, wobei die erste Innenwand (30) einen ersten Strömungsweg definiert, und
eine zweite Leitung (22), die um die erste Leitung (20) angeordnet ist, wobei die zweite Leitung (22) eine zweite Innenwand (80), die von der ersten Außenwand (32) beabstandet ist, und eine zweite Außenwand (82) aufweist, die sich jeweils zwischen einem ersten Ende (84) der zweiten Leitung und einem zweiten Ende (86) der zweiten Leitung erstrecken;
**dadurch gekennzeichnet, dass** die zweite Leitung (22) einen ersten Resonator (110) der zweiten Leitung definiert, der zwischen der zweiten Innenwand (80) und der zweiten Außenwand (82) definiert ist.

2. Leitungsbaugruppe nach Anspruch 1, wobei der erste Resonator (50) der ersten Leitung eine erste Öffnung, die sich durch die erste Innenwand (30) erstreckt, einen ersten Hohlraum (62), der zwischen der ersten Innenwand (30) und der ersten Außenwand (32) definiert ist, und eine erste Engstelle (64), die sich zwischen der ersten Öffnung und dem ersten Hohlraum erstreckt, beinhaltet.

3. Leitungsbaugruppe nach Anspruch 2, wobei die erste Leitung (20) einen zweiten Resonator (52) der ersten Leitung definiert, der von dem ersten Resonator (50) der ersten Leitung beabstandet ist.

4. Leitungsbaugruppe nach Anspruch 3, wobei der zweite Resonator (52) der ersten Leitung eine zweite Öffnung (70), die sich durch die erste Innenwand (30) erstreckt, einen zweiten Hohlraum (72), der zwischen der ersten Innenwand (30) und der ersten Außenwand (32) definiert ist, und eine zweite Engstelle (74), die sich zwischen der zweiten Öffnung (70) und dem zweiten Hohlraum (32) erstreckt, definiert.

5. Leitungsbaugruppe nach Anspruch 4, wobei der erste Hohlraum (62) ein erstes Volumen aufweist und der zweite Hohlraum (72) ein zweites Volumen aufweist.

6. Leitungsbaugruppe nach Anspruch 5, wobei sich das erste Volumen von dem zweiten Volumen unterscheidet.

7. Leitungsbaugruppe nach einem der vorstehenden Ansprüche, wobei die zweite Leitung (22) einen Anschluss (100) definiert, der sich von der zweiten Innenwand (80) zur zweiten Außenwand (82) erstreckt.

8. Leitungsbaugruppe nach einem der vorstehenden Ansprüche, ferner Folgendes umfassend:
ein Stützelement (24), das sich zwischen der ersten Außenwand (32) und der zweiten Innenwand (80) erstreckt, wodurch die zweite Leitung (22) von der ersten Leitung (20) beabstandet wird.

9. Leitungsbaugruppe nach Anspruch 8, wobei ein isolierender Luftspalt zwischen der ersten Außenwand (32) der ersten Leitung (20) und der zweiten Innenwand (82) der zweiten Leitung (22) definiert ist.

## Revendications

1. Ensemble conduit (10) comprenant :
un premier conduit (20) ayant une première paroi interne (30) et une première paroi externe (32), chacune s'étendant entre une première extrémité de conduit (34) et une seconde extrémité de conduit (36), le premier conduit (20) définissant un premier résonateur de premier conduit (50) qui s'étend entre la première paroi interne (30) et la première paroi externe (32), la première paroi interne (30) définissant un premier chemin d'écoulement, et
un second conduit (22) qui est disposé autour du premier conduit (20), le second conduit (22) ayant une seconde paroi interne (80) espacée de la première paroi externe (32) et une seconde paroi externe (82), chacune s'étendant entre une première extrémité de second conduit (84) et une seconde extrémité de second conduit (86) ;
**caractérisé en ce que** le second conduit (22) définit un premier résonateur de second conduit (110) qui est défini entre la seconde paroi interne (80) et la seconde paroi externe (82).

2. Ensemble conduit selon la revendication 1, dans lequel le premier résonateur de premier conduit (50) comporte une première ouverture qui s'étend à travers la première paroi interne (30), une première cavité (62) définie entre la première paroi interne (30) et la première paroi externe (32), et un premier étranglement (64) s'étendant entre la première ouverture et la première cavité.

3. Ensemble conduit selon la revendication 2, dans lequel le premier conduit (20) définit un second résonateur de premier conduit (52) qui est espacé du premier résonateur de premier conduit (50).

4. Ensemble conduit selon la revendication 3, dans lequel le second résonateur de premier conduit (52) définit une seconde ouverture (70) qui s'étend à travers la première paroi interne (30), une seconde cavité (72) qui est définie entre la première paroi interne (30) et la première paroi externe (32), et un second étranglement (74) qui s'étend entre la seconde ouverture (70) et la seconde cavité (32).

5. Ensemble conduit selon la revendication 4, dans lequel la première cavité (62) a un premier volume et la seconde cavité (72) a un second volume.

6. Ensemble conduit selon la revendication 5, dans lequel le premier volume est différent du second volume.

7. Ensemble conduit selon une quelconque revendication précédente, dans lequel le second conduit (22) définit un orifice (100) qui s'étend de la seconde paroi interne (80) à la seconde paroi externe (82).

8. Ensemble conduit selon une quelconque revendication précédente, comprenant en outre :
un élément de support (24) qui s'étend entre la première paroi externe (32) et la seconde paroi interne (80), en espaçant le second conduit (22) du premier conduit (20).

9. Ensemble conduit selon la revendication 8, dans lequel un entrefer isolant est défini entre la première paroi externe (32) du premier conduit (20) et la seconde paroi interne (82) du second conduit (22).
